# EUROPEAN PATENT SPECIFICATION

(11) **EP 1 893 732 B1**
(45) Date of publication and mention of the grant of the patent: **25.02.2009**
(21) Application number: 06763569.8
(22) Date of filing: 07.06.2006
(51) Int. Cl.: C11C 3/10, A23D 7/00, A23D 9/00, A23G 3/00, A23C 11/04, A23G 9/32

(54) **NON-HYDROGENATED FAT COMPOSITION AND ITS USE**
NICHTHYDRIERTE FETTZUSAMMENSETZUNG UND VERWENDUNG DAVON
COMPOSITION DE GRAISSE NON HYDROGENEE ET UTILISATION DE CELLE-CI

(30) Priority: 09.06.2005 EP 05105072
(43) Date of publication of application: 05.03.2008
(73) Proprietor: Fuji Oil Europe, B-9042 Gent (BE)
(72) Inventor: VAN DEN BREMT, Karen, B-9340 Lede (BE); CLEENEWERCK, Bernard, 8301 Knokke-Heist (BE)
(74) Representative: Luys, Marie-José A.H.
(86) International application number: PCT/EP2006/062985
(87) International publication number: WO 2006/131539

(56) References cited:
- EP-A- 0 458 310
- WO-A-96/19115
- WO-A-97/16978
- US-A- 4 748 028
- US-A- 5 439 700
- US-B1- 6 214 394
- US-B1- 6 488 971
- ZHANG H ET AL: "LIPOZYME IM-CATALYZED INTERESTERIFICATION FOR THE PRODUCTION OF MARGARINE FATS IN A 1 KG SCALE STIRRED TANK REACTOR" EUROPEAN JOURNAL OF LIPID SCIENCE AND TECHNOLOGY, WILEY VCH VERLAG, WEINHEIM, DE, vol. 102, no. 6, June 2000 (2000-06), pages 411-418, XP000936008 ISSN: 1438-7697

## Description

The present invention relates to a non-hydrogenated vegetable fat composition suitable for use in confectionery products according to the preamble of the first claim. The present invention also relates to final products comprising this non-hydrogenated vegetable fat composition, as well as to a process for producing this non-hydrogenated vegetable fat composition.

### Background of the invention.

In the art, a wide variety of fats have been used in the production of confectionery products like coatings, fillings and centres. When the use of a rather hard fat is needed, a choice can be made between 3 main classes of fats.

The first main class are the so called cocoa butter equivalents (CBE's), which are high quality fats showing a very good cocoa butter compatibility. These fats however present the disadvantage that they need to be tempered and that they are too expensive for certain applications. The second main class of fats are the so called non-lauric cocoa butter replacers (NL-CBR). These fats show a medium compatibility with cocoa butter; they are quite cheap as they can be obtained by hydrogenation of liquid oils which are largely available. The most important disadvantage of the non-lauric cocoa butter replacers is their too high content of trans fatty acids, which create a higher risk for cardiovascular diseases. The third main class of fats concern the lauric hard butters. Lauric hard butters present the disadvantage of a very poor cocoa butter compatibility. Besides this they are mainly based on hydrogenated or fractionated palmkernel oil.

The fractionation process to which the fats resulting in cocoa butter equivalents have to be subjected, is quite expensive. Hydrogenation of fats on the other hand involves the risk to the formation of trans fatty acids, as well as the risk to complete hydrogenation giving a fat with 100% saturated fatty acids. Therefore the hydrogenation process is more and more considered as an unwanted process giving unhealthy products and consumers preference is merging clearly to food products that are substantially free of hydrogenated fats.

From the above, it will have become clear that there is a need to a hard fat composition, which is suitable for use as a confectionery fat, which may be produced at an acceptable cost, which is characterised by a good melting in the mouth without involving waxiness, which shows a sufficiently high crystallisation rate and which does not contain hydrogenated components. There is also a need to a method for producing such a fat composition.

From GB-A-1.495.254 an edible fat composition is known which is suitable for use in confectionery products. The fat composition has a random fatty acid distribution, and is a blend comprising a lauric fat as the main component, and a stearine fraction of a non-lauric edible C16-C18 fat as the minor component. The fat is suitable for use in coating applications. The fat is obtained by random interesterification of a lauric and a non-lauric component in the presence of a sodium methylate catalyst. To increase the hardness of the fat and render it fit for use in coating applications, the fat is subjected to a hydrogenation after having been interesterified. In some cases also the non-lauric component is hydrogenated before being subjected to interesterification. GB-A-1.495.254 does however not contain any teaching as to possible ways in which hydrogenation can be avoided and still a hard butter can be obtained suitable for use in confectionery applications.

EP-A-923.874 discloses non-temper, low lauric fat blends which are suitable for use in confectionery coatings and are characterised by a C18:0/C16:0 ratio between 2 and 7. When producing these fats, one or more raw materials are subjected to a full or partial hydrogenation, which after blending are randomly interesterified in the presence of sodium methylate as a catalyst. EP-A-923.874 does however not teach how to obtain a coating fat, while avoiding hydrogenation of the starting, raw material.

From EP-A-532.086 a non-temper, non-hydrogenated lauric fat composition is known which is suitable for use in confectionery coatings. The major component of the composition is a lauric fat, which has a steep SFC-profile and is obtained by subjecting palm kernel oil to a double dry fractionation process. In the process disclosed by EP-A-532.086, the fat blend is not subjected to an interesterification. To increase the heat resistance of the lauric fat, the fat is subjected to a double fractionation, which however is an expensive process. The increased heat resistance is expressed by an increase of SFC at 30°C. To improve contraction and mould release, 1 to 15 wt. % of palm stearine is added to the fat composition.

CA-A-2098314 discloses a non-hydrogenated hardstock for margarine, comprising a co-randomly interesterified blend of generally equal proportions of palm stearin and palm kernel stearin. The solid fat profile of this blend is rather flat with a high "tailing" - the SFC at 20°C is 49.83%; the SFC at 35°C is 22.17%; the SFC at 40°C is 10.9%. This fat is suitable for use in margarines in combination with liquid oil. However, the fat is unsuitable for use in confectionery applications like for instance coatings or centres because of its bad melting profile, involving a waxy feeling in the mouth.

EP-A-1.159.877 also discloses a hard structural fat, which is free of trans fatty acids and is suitable for use in margarine blends and spreads. A combination of such a hardstock with at least 60% liquid oil is claimed, the hardstock being an interesterified blend of a palm oil fraction and a lauric fat such as dry fractionated palm kernel oil.

WO 97/16978 discloses a fat which is suitable for use in the preparation of spreads. The fat is substantially free of trans-saturated fatty acids and consists of a fat which contains an interesterified mixture of high lauric rapeseedoil and a second fat A, with at least 40% saturated fatty acids. Suitable fats for fat A are fully hydrogenated oils. With these fats a quite steep SFC-profile can be obtained, however WO 97/16978 does not teach how to achieve this without using hydrogenated fats.

### Object of the invention.

It is the object of the present invention to provide a fat composition which is suitable for use in confectionery applications, which has not been subjected to hydrogenation, which does not need tempering, which may be produced at an acceptable cost with respect to raw material and process costs. It is a further object of the invention to provide a fat composition which is characterised by a steep SFC-profile, a good melting in the mouth without involving waxiness, a good heat resistance and which shows a sufficiently high crystallisation speed.

### Description of the invention.

It has now been found with the present invention that this object is achieved with a fat composition showing the technical features of the characterising part of the first claim.

Thereto, the fat composition of this invention is characterised in that the non-hydrogenated vegetable fat composition consists of an interesterified fat which is obtained by subjecting a blend of an amount of at least one lauric fat and an amount of at least one non-lauric fat to an interesterification, and in that the non-hydrogenated vegetable fat composition has an SFC which is at least 50 wt. % at 20°C and less than 15 wt. % at 35°C, in that the non-hydrogenated vegetable fat composition has a content of C12 + C16 fatty acids of at least 55 wt. % with respect to the total weight of the fat composition and a ratio of C12/C16 fatty acids of at least 1. With C12 + C16 fatty acids is meant the sum of the fatty acids containing 12 carbon atoms and those containing 16 carbon atoms.

A first preferred embodiment of the non-hydrogenated vegetable fat composition of this invention is characterised in that the fat composition has a C12/C16 ratio of at least 1.2, preferably at least 1.4, most preferably at least 1.5. Or in other words, the weight ratio between the fatty acids having 12 carbon atoms and 16 carbon atoms is at least 1.2, preferably at least 1.4, most preferably at least 1.5.

Preferably, the non-hydrogenated vegetable fat composition has an SFC at 20°C of at least 55 wt. %, more preferably at least 60 wt. %, most preferably at least 65 wt. %.

Preferably also the non-hydrogenated vegetable fat composition has an SFC at 35°C of less than 10 wt. %, more preferably less than 5 wt. %, most preferably less than 3 wt. %.

A further preferred embodiment of this invention is characterised in that the non-hydrogenated vegetable fat composition has a C12 +C16 content of at least 60 wt. %, more preferably at least 63 wt.% with respect to the total weight of the composition. Preferably the content of saturated fatty acids having 18 carbon atoms, i.e. the C18-0 content, is less than 10 wt. % with respect to the total weight of the fat composition, preferably less than 5 wt. %, most preferably less than 3 wt. %.

An additional preferred embodiment of the invention is characterised by a non-hydrogenated vegetable fat composition having a difference in SFC at 20 and 35°C of at least 50 wt. %, preferably at least 55 wt. %, most preferably at least 60 wt. %.

Optimum results are achieved with a fat composition in which the amount of the at least one lauric fat ranges from 5 to 95 wt. % with respect to the total weight of the fat composition, preferably from 40 to 95 wt. %, most preferably 60 to 95 wt.% %, and in that the amount of the at least one non-lauric part ranges from 95 to 5 wt. %, preferably from 50 to 5 wt. %, most preferably from 35 to 5 wt. % with respect to the total weight of the fat composition. Thereby preferably at least one of the at least one lauric fats is a fractionated fat with an IV of less than 12, preferably less than 9. Preferably also at least one of the at least one non-lauric fats is a fractionated fat with an IV of less than 20, preferably less than 15.

These fat compositions show a very good and sharp melting profile. From these fat compositions confectionery products can be made with a cool melting sensation in the mouth, whereas any risk to showing the minimum sign of "waxiness" is reduced as much as possible.

The present invention also relates to a process for producing such a fat composition, wherein a blend of at least one lauric fat and at least one non-lauric fat is subjected to either a chemical or an enzymatic interesterification process.

The present invention further relates to a confectionery or margarine fat containing an amount of the above described fat composition.

The present invention also relates to a confectionery product containing an amount of the above described fat composition, or the above described a confectionery fat.

The present invention further relates to confectionery products - such as a coating, a cream, a filling, a centre or a whipping cream -, to a coffee whitener or ice cream composition containing the above described fat composition or confectionery fat.

### Examples.

### Example 1.

A fat composition was prepared by blending 70 wt. % of standard palmkernel oil, 8 wt. % of coconut oil and 22 wt. % of a hard palmstearine with IV 6.5, followed by chemical interesterification using sodium methylate as a catalyst. The properties of the product are given in table 1 as Fat Nr 1.

### Comparative example A.

A fat composition was prepared by blending 60 wt. % of standard palmkernel oil with 40 wt. % of fully hydrogenated palmkernel oil. The characteristics of this fat are also given in table 1 as Comp.Fat Nr. 2. The Solid Fat Content (SFC) and Fatty Acid Composition (FAC) are given in wt. % with respect to the total weight of the composition. The crystallisation rate is given as wt. % crystallised with respect to the total weight of the composition.

**Table 1.**

| | Fat Nr1 | Comp. Fat Nr 2 |
|---|---|---|
| **SFC** | | |
| 10°C | 85,4 | 85,9 |
| 20°C | 60,7 | 62,2 |
| 25°C | 40,0 | 33,7 |
| 30°C | 14,5 | 8,9 |
| 35°C | 0,2 | 2,5 |

| **FAC** | | |
|---|---|---|
| C12 | 36,5 | 45,9 |
| C16 | 25,6 | 9,0 |
| C18-0 | 3,5 | 11,0 |
| C12/C16 | 1,4 | |

| **Cryst. Rate at 15°C** | | |
|---|---|---|
| 2,5 min. | 17,6 | 7,2 |
| 5 min. | 44,6 | 32,7 |
| 7,5 min | 55,8 | 54,0 |
| 10 min. | 59,2 | 60,5 |
| 15 min. | 61,4 | 63,7 |

From the comparison of the two fats described above it appears that Fat Nr. 1, which is a fat according to the invention, has the same steepness in SFC-profile as Comp. Fat Nr. 2, containing 40% hydrogenated fat. Crystallisation speed at 15°C of fat Nr 1 is slightly better than the composition with hydrogenated fat.

### Example 2.

A fat composition was prepared by blending 65 wt. % of palmkernel stearine and 35 wt. % of a palmstearine with IV 18.4, followed by chemical interesterification using sodium methylate as a catalyst. The properties of the product are given in table 2 as Fat Nr. 3.

### Comparative example B.

A fat composition was prepared by blending 65 wt. % of palmkernel stearine and 35 wt. % of a palmstearine with IV 18.4 as described above in example 2. The fat blend was not subjected to interesterification. The properties of this fat blend are given in table 2 as Comp. Fat Nr. 4.

### Comparative example C.

Another fat composition consisted of 100% palmkernelstearine. The properties of this fat are given in table 2 as Comp. Fat Nr 5.

**Table 2: Solid fat content (SFC) and fatty acid content (FAC) in wt. % with respect to the total weight of the composition.**

| | Fat Nr 3 | Comp. Fat Nr4 | Comp. Fat Nr 5 |
|---|---|---|---|
| **SFC** | | | |
| 10°C | 92 | 92,3 | 91,6 |
| 20°C | 76,6 | 81,3 | 82,6 |
| 25°C | 59,3 | 63,1 | 65,7 |
| 30°C | 34,7 | 32,6 | 28,5 |
| 35°C | 9,5 | 19,1 | 0 |
| 40°C | 0 | 14,7 | 0 |
| | | | |

| **FAC** | | | |
|---|---|---|---|
| C12 | 36,9 | 36,9 | 54,5 |
| C16 | 30,8 | 30,8 | 8,9 |
| C18-0 | 3,4 | 3,4 | 2,3 |
| C12/C16 | 1,2 | 1,2 | 6,1 |

### Example 3.

Confectionery coatings were prepared according to the recipe given in table 3.

After having prepared the coating composition, moulds were filled with the coating composition to make tablets. This was done at 45°C except for the coating with Comp. fat Nr. 4, where a temperature of 50°C was applied, because of the high viscosity of the mass. The moulds, containing 16 tablets, were cooled for 20' at 5°C. Thereafter the tablets were demoulded.

The tablets made with Fat Nr. 3 could all be demoulded easily. The tablets did not show blooming.

Of the tablets made with Comp. fat Nr. 5, 10 out of 16 could be demoulded. However, the tablets showed blooming.

Of the tablets made with Comp. fat Nr. 4, none of the 16 could be demoulded. This mould was held for another 10' at 5°C, after which 4 tablets could be demoulded. These 4 tablets showed strong blooming.

After having been demoulded, all tablets were kept at 20°C during 2 weeks for stabilisation. Heat resistance was tested by exposing a tablet of each of the coating fats for 2 hours to a temperature of 28°C. When touched by hand the tablets made with the comparative fats nr. 4 and 5 showed strong fingerprints, the tablet made with fat Nr. 3 was clearly better. The latter tablet could still be broken, the other tablets had become completely plastic and could be deformed without breaking. The coatings made with the comparative fats clearly had a too low heat resistance.

**Table 3.**

| Component | Concentration in wt. % with respect to |
|---|---|
| | total weight of composition |
| Fat | 35 |
| Sugar | 50 |
| Cocoapowder | 15 |
| Lecithin | 0.40 |
| vanilin | 0.02 |

## Claims

1. A non-hydrogenated vegetable fat composition suitable for use in confectionery fats, **characterised in that** the non-hydrogenated vegetable fat composition consists of an interesterified fat obtained by subjecting a blend of an amount of at least one lauric fat and an amount of at least one non-lauric fat to an interesterification, and **in that** the non-hydrogenated vegetable fat composition has an SFC which is at least 50 wt. % at 20°C and less than 15 wt. % at 35°C, **in that** the non-hydrogenated vegetable fat composition has a content of C12 + C 16 fatty acids of at least 55 wt. % with respect to the total weight of the fat composition and a ratio of C12/C16 fatty acids of at least 1.

2. A fat composition as claimed in claim 1, **characterised in that** the non-hydrogenated vegetable fat composition has a C12/C16 weight ratio of at least 1.2, preferably at least 1.4, more preferably at least 1.5.

3. A fat composition as claimed in claim 1 or 2, **characterised in that** the non-hydrogenated vegetable fat composition has an SFC at 20°C of at least 55 wt. %, preferably at least 60 wt. %, more preferably at least 65 wt. %.

4. A fat composition as claimed in any one of claims 1-3, **characterised in that** the non-hydrogenated vegetable fat composition has an SFC at 35°C of less than 10 wt. %, more preferably less than 5 wt. %, most preferably less than 3 wt. %.

5. A fat composition as claimed in any one of claims 1-4, **characterised in that** the non-hydrogenated vegetable fat composition has a content C12 + C16 fatty acids of at least 60 wt. %, preferably at least 63 wt.% with respect to the total weight of the composition.

6. A fat composition as claimed in any one of claims 1-5, **characterised in that** the difference in SFC at 20°C and 35°C is at least 50 wt. %, preferably at least 55 wt. %, more preferably at least 60 wt. %.

7. A fat composition as claimed in any one of claims 1-6, **characterised in that** the fat composition has a content of C18-0 fatty acids of less than 10 wt. % with respect to the total weight of the fat composition, preferably less than 5 wt. %, more preferably less than 3 wt. %.

8. A fat composition as claimed in any one of claims 1-7, **characterised in that** the amount of the at least one lauric fat ranges from 5 to 95 wt. % with respect to the total weight of the fat composition, preferably from 40 to 95 wt. %, more preferably 60 to 95 wt.% %, and **in that** the amount of the at least one non-lauric fat ranges from 95 to 5 wt. %, preferably from 50 to 5 wt. %, more preferably from 35 to 5 wt. % with respect to the total weight of the fat composition.

9. A fat composition as claimed in any one of claims 1-8, **characterised in that** at least one of the at least one lauric fats is a fractionated fat with an IV of less than 12, preferably less than 9.

10. A fat composition as claimed in any one of claims 1-9, **characterised in that** at least one of the at least one non-lauric fats is a fractionated fat with an IV of less than 20, preferably less than 15.

11. A confectionery or margarine fat containing an amount of the fat composition claimed in any one of claims 1-10.

12. A process for producing a fat as claimed in any one of claims 1 to 10, **characterised in that** a blend of at least one lauric fat and at least one non-lauric fat is subjected to a chemical interesterification process.

13. A process for producing a non-hydrogenated fat vegetable composition as claimed in any one of claims 1 to 10, **characterised in that** a blend of at least one lauric fat and at least one non-lauric fat is subjected to an enzymatic interesterification .

14. A confectionery product containing an amount of the fat composition of any one of claims 1-10, or a confectionery fat of claim 11.

15. A confectionery product as claimed in claim 14, **characterised in that** the confectionery product is a coating, a cream, a filling, a centre or a whipping cream.

16. A coffee whitener containing an amount of the non-hydrogenated vegetable fat composition of any one of claims 1-10, or the confectionery fat of claim 11.

17. Ice cream composition containing an amount of the non-hydrogenated vegetable fat composition of any one of claims 1-10, or the confectionery fat of claim 11.

## Patentansprüche

1. Nichthydrierte pflanzliche Fettzusammensetzung, die zur Verwendung in Süßwarenfetten geeignet ist, **dadurch gekennzeichnet, dass** die nichthydrierte pflanzliche Fettzusammensetzung aus einem umgeesterten Fett besteht, das erhalten wird, indem eine Mischung aus einer Menge mindestens eines Laurinfetts und einer Menge mindestens eines Nicht-Laurinfetts umgeestert wird, und dass die nichthydrierte pflanzliche Fettzusammensetzung einen SFC-Wert aufweist, der mindestens 50 Gewichtsprozent bei 20°C und weniger als 15 Gewichtsprozent bei 35°C beträgt, dass die nichthydrierte pflanzliche Fettzusammensetzung einen Gehalt von C12 + C16 Fettsäuren von mindestens 55 Gewichtsprozent in Bezug auf das Gesamtgewicht der Fettzusammensetzung und ein Verhältnis von C12/C16-Fettsäuren von mindestens 1 aufweist.

2. Fettzusammensetzung nach Anspruch 1, **dadurch gekennzeichnet, dass** die nichthydrierte pflanzliche Fettzusammensetzung ein C12/C16-Gewichtsverhältnis von 1,2, vorzugsweise 1,4, insbesondere mindestens 1,5 aufweist.

3. Fettzusammensetzung nach Anspruch 1 oder 2, **dadurch gekennzeichnet, dass** die nichthydrierte pflanzliche Fettzusammensetzung einen SFC-Wert bei 20°C von mindestens 55 Gewichtsprozent, vorzugsweise mindestens 60 Gewichtsprozent, insbesondere mindestens 65 Gewichtsprozent aufweist.

4. Fettzusammensetzung nach einem der Ansprüche 1 bis 3, **dadurch gekennzeichnet, dass** die nichthydrierte pflanzliche Fettzusammensetzung einen SFC-Wert bei 35°C von weniger als 10 Gewichtsprozent, insbesondere weniger als 5 Gewichtsprozent, ganz besonders weniger als 3 Gewichtsprozent aufweist.

5. Fettzusammensetzung nach einem der Ansprüche 1 bis 4, **dadurch gekennzeichnet, dass** die nichthydrierte pflanzliche Fettzusammensetzung einen Gehalt an C12 + C16 Fettsäuren von mindestens 60 Gewichtsprozent, vorzugsweise mindestens 63 Gewichtsprozent in Bezug auf das Gesamtgewicht der Zusammensetzung aufweist.

6. Fettzusammensetzung nach einem der Ansprüche 1 bis 5, **dadurch gekennzeichnet, dass** der Unterschied im SFC-Wert bei 20°C und 35°C mindestens 50 Gewichtsprozent, vorzugsweise mindestes 55 Gewichtsprozent und insbesondere mindestens 60 Gewichtsprozent beträgt.

7. Fettzusammensetzung nach einem der Ansprüche 1 bis 6, **dadurch gekennzeichnet, dass** die Fettzusammensetzung einen Gehalt von C18-0 Fettsäuren von weniger als 10 Gewichtsprozent, vorzugsweise weniger als 5 Gewichtsprozent, insbesondere weniger als 3 Gewichtsprozent in Bezug auf das Gesamtgewicht der Zusammensetzung aufweist.

8. Fettzusammensetzung nach einem der Ansprüche 1 bis 7, **dadurch gekennzeichnet, dass** die Menge des mindestens einen Laurinfetts im Bereich von 5 bis 95 Gewichtsprozent, vorzugsweise von 40 bis 95 Gewichtsprozent, insbesondere 60 bis 95 Gewichtsprozent in Bezug auf das Gesamtgewicht der Zusammensetzung liegt, und dass die Menge an dem mindestens einen Nicht-Laurinfett im Bereich von 95 bis 5 Gewichtsprozent, vorzugsweise von 50 bis 5 Gewichtsprozent, insbesondere von 35 bis 5 Gewichtsprozent in Bezug auf das Gesamtgewicht der Zusammensetzung liegt.

9. Fettzusammensetzung nach einem der Ansprüche 1 bis 8, **dadurch gekennzeichnet, dass** mindestens eines von den mindestens einen Laurinfetten ein fraktioniertes Fett mit einem IV-Wert von weniger als 12, vorzugsweise weniger als 9 ist.

10. Fettzusammensetzung nach einem der Ansprüche 1 bis 9, **dadurch gekennzeichnet, dass** mindestens eines der mindestens einen Nicht-Laurinfette ein fraktioniertes Fett mit einem IV-Wert von weniger als 20, vorzugsweise weniger als 15 ist.

11. Süßwaren- oder Margarinenfett, das eine Menge der Fettzusammensetzung nach einem der Ansprüche 1 bis 10 enthält.

12. Verfahren zur Herstellung eines Fetts nach einem der Ansprüche 1 bis 10, **dadurch gekennzeichnet, dass** eine Mischung aus mindestens einem Laurinfett und mindestens einem Nicht-Laurinfett einem chemischen Umesterungsprozess unterzogen wird.

13. Verfahren zur Herstellung einer nichthydrierten pflanzlichen Fettzusammensetzung nach einem der Ansprüche 1 bis 10, **dadurch gekennzeichnet, dass** eine Mischung aus mindestens einem Laurinfett und mindestens einem Nicht-Laurinfett einer enzymatischen Umesterung unterzogen wird.

14. Süßwarenprodukt, das eine Menge der Fettzusammensetzung nach einem der Ansprüche 1 bis 10 oder ein Süßwarenfett nach Anspruch 11 enthält.

15. Süßwarenprodukt nach Anspruch 14, **dadurch gekennzeichnet, dass** das Süßwarenprodukt eine Glasur, eine Creme, eine Füllung, eine Einlage oder eine Schlagcreme ist.

16. Kaffee-Weißmacher, der eine Menge der nichthydrierten pflanzlichen Fettzusammensetzung nach einem der Ansprüche 1 bis 10 oder das Süßwarenfett nach Anspruch 11 enthält.

17. Eiscremezusammensetzung, die eine Menge der nichthydrierten pflanzlichen Fettzusammensetzung nach einem der Ansprüche 1 bis 10 oder das Süßwarenfett nach Anspruch 11 enthält.

## Revendications

1. Composition de graisse végétale non hydrogénée appropriée pour être utilisée dans des graisses de confiserie, **caractérisée en ce que** la composition de graisse végétale non hydrogénée consiste en une graisse interestérifiée obtenue en soumettant un mélange d'une quantité d'au moins une graisse laurique et d'une quantité d'au moins une graisse non laurique à une interestérification, et **en ce que** la composition de graisse végétale non hydrogénée a un SFC qui est au moins de 50 % en poids à 20° C et de moins de 15 % en poids à 35° C, **en ce que** la composition de graisse végétale non hydrogénée a une teneur en acides gras en C12 + C16 d'au moins 55 % en poids par rapport au poids total de la composition de graisse et un rapport d'acides gras en C12 / C16 d'au moins 1.

2. Composition de graisse comme revendiquée dans la revendication 1, **caractérisée en ce que** la composition de graisse végétale non hydrogénée a un rapport en poids C12 / C16 d'au moins 1,2, de préférence d'au moins 1,4, plus préférablement d'au moins 1,5.

3. Composition de graisse comme revendiquée dans la revendication 1 ou 2, **caractérisée en ce que** la composition de graisse végétale non hydrogénée a un SFC à 20° C d'au moins 55 % en poids, de préférence d'au moins 60 % en poids, plus préférablement d'au moins 65 % en poids.

4. Composition de graisse comme revendiquée dans l'une quelconque des revendications 1 - 3, **caractérisée en ce que** la composition de graisse végétale non hydrogénée a un SFC à 35° C de moins de 10 % en poids, plus préférablement de moins de 5 % en poids, le plus préférablement de moins de 3 % en poids.

5. Composition de graisse comme revendiquée dans l'une quelconque des revendications 1 - 4, **caractérisée en ce que** la composition de graisse végétale non hydrogénée a une teneur en acides gras en C12 + C16 d'au moins 60 % en poids, de préférence d'au moins 63 % en poids par rapport au poids total de la composition.

6. Composition de graisse comme revendiquée dans l'une quelconque des revendications 1 - 5, **caractérisée en ce que** la différence de SFC à 20° C et à 35° C est d'au moins 50 % en poids, de préférence d'au moins 55 % en poids, plus préférablement d'au moins 60 % en poids.

7. Composition de graisse comme revendiquée dans l'une quelconque des revendications 1 - 6, **caractérisée en ce que** la composition de graisse a une teneur en acides gras en C18 - 0 de moins de 10 % en poids par rapport au poids total de la composition de graisse, de préférence de moins de 5 % en poids, plus préférablement de moins de 3 % en poids.

8. Composition de graisse comme revendiquée dans l'une quelconque des revendications 1 - 7, **caractérisée en ce que** la quantité de ladite au moins une graisse laurique est de l'ordre de 5 à 95 % en poids par rapport au poids total de la composition de graisse, de préférence de 40 à 95 % en poids, plus préférablement de 60 à 95 % en poids, et **en ce que** la quantité de ladite au moins une graisse non laurique est de l'ordre de 95 à 5 % en poids, de préférence de 50 à 5 % en poids, plus préférablement de 35 à 5 % en poids par rapport au poids total de la composition de graisse.

9. Composition de graisse comme revendiquée dans l'une quelconque des revendications 1 - 8, **caractérisée en ce qu'**au moins une desdites au moins une graisses lauriques est une graisse fractionnée avec un indice d'iode de moins de 12, de préférence de moins de 9.

10. Composition de graisse comme revendiquée dans l'une quelconque des revendications 1 - 9, **caractérisée en ce qu'**au moins une desdites au moins une graisses non lauriques est une graisse fractionnée avec un indice d'iode de moins de 20, de préférence de moins de 15.

11. Graisse de confiserie ou de margarine contenant une quantité de la composition de graisse revendiquée dans l'une quelconque des revendications 1 - 10.

12. Procédé pour produire une graisse telle que revendiquée dans l'une quelconque des revendications 1 à 10, **caractérisé en ce qu'**un mélange d'au moins une graisse laurique et d'au mois une graisse non laurique est soumis à un procédé chimique d'interestérification.

13. Procédé pour produire une composition végétale de graisse non hydrogénée telle que revendiquée dans l'une quelconque des revendications 1 à 10, **caractérisé en ce qu'**un mélange d'au moins une graisse laurique et d'au mois une graisse non laurique est soumis à une interestérification enzymatique.

14. Produit de confiserie contenant une quantité de la composition de graisse de l'une quelconque des revendications 1 - 10, ou une graisse de confiserie de la revendication 11.

15. Produit de confiserie tel que revendiqué dans la revendication 14, **caractérisé en ce que** le produit de confiserie est un enrobage, une crème, un fourrage, un centre ou une crème à fouetter.

16. Succédané de lait en poudre contenant une quantité de la composition de graisse végétale non hydrogénée de l'une quelconque des revendications 1 - 10, ou la graisse de confiserie de la revendication 11.

17. Composition de crème glacée contenant une quantité de la composition de graisse végétale non hydrogénée de l'une quelconque des revendications 1 - 10, ou la graisse de confiserie de la revendication 11.
